# EUROPÄISCHE PATENTSCHRIFT

(11) **EP 0 490 012 B1**
(45) Veröffentlichungstag und Bekanntmachung des Hinweises auf die Patenterteilung: **05.06.1996**
(21) Anmeldenummer: 90710037.4
(22) Anmeldetag: 13.12.1990
(51) Int. Cl.: G01S 17/88, B66C 15/04

(54) **Sensor-System zur Überwachung von Kranen**
Sensor system for monitoring cranes
Système de capteurs pour la surveillance de grues

(43) Veröffentlichungstag der Anmeldung: 17.06.1992
(73) Patentinhaber: ABUS Kransysteme GmbH & Co. KG., D-51647 Gummersbach (DE)
(72) Erfinder: Bühne, Werner, Dipl.-Ing., W-5270 Gummersbach (DE); Bube, Eckhard, Dipl.-Ing., W-5270 Gummersbach (DE)
(74) Vertreter: Dörner, Lothar, Dipl.-Ing.

(56) Entgegenhaltungen:
- DE-A- 3 623 423
- FR-A- 2 370 673
- GB-A- 2 205 463
- PATENT ABSTRACTS OF JAPAN vol. 5, no. 52 (P-56)(724) 11. April 1981& JP-A-56 7 070 (HITACHI )

## Beschreibung

### Technisches Gebiet:

Die Erfindung bezieht sich auf ein berührungslos mit Lasern, Reflektoren und einer Auswerteeinheit arbeitendes Sensor-System zur Überwachung von zwei oder mehr Kranen, die auf einer gemeinsamen Kranbahn verfahrbar sind.

Wenn zwei Krane, worunter hier und nachfolgend auch andere Hebezeuge zu verstehen sind, mit Nennlast auf derselben Kranbahn innerhalb eines kurzen Streckenabschnitts betrieben werden, ergibt sich häufig die Schwierigkeit, daß die Traglast der Kranbahn nicht ausreichend ist. Es muß dann das Zusammenfahren der Krane unter einen vorgegebenen Mindestabstand verhindert werden.

### Stand der Technik:

Es ist bekannt, für den vorgenannten Zweck - und auch um drohende Kollisionen zweier Krane zu erkennen - Einrichtungen zu verwenden, die mit Ultraschall (FR-A-2 370 673) oder mit Infrarotstrahlen arbeiten. Wird ein vorgegebener Abstand der Krane unterschritten, wird eine Sicherheitsschaltung aktiviert.

Die Reichweite der bekannten Überwachungsschaltungen ist auf ca. 30 m beschränkt. Sie haben daher den Nachteil, daß ihre Sicherheit im Störungsfall mangelhaft ist: Wird bei Überschreiten der Reichweite und damit verbunden bei Unterschreiten festgelegter Meßwerte eine Fehlermeldung ausgegeben, kann dieser "normale" Betriebsfall, bei dem der Abstand der Krane größer ist als die Reichweite der Überwachungsschaltung, nicht von einer Fehlermeldung des Überwachungssystems unterschieden werden, wenn der Fehler innerhalb der Reichweite der Überwachungsschaltung auftritt. Hinzu kommt, daß jeder der beiden überwachten Krane sowohl eine Sendeeinheit als auch einen Reflektor im Bereich jeder der beiden Schienen der Kranbahn aufweist, was die Überwachungseinrichtung aufwendig macht.

Zum Stand der Technik (DE-A-3 623 423) gehört auch ein berührungslos arbeitendes Sensor-System zum Erfassen der Position einer Laufkatze oder eines schienengeführten Krans, bei dem zwei Meßsysteme zur Messung zweier unterschiedlicher Abstände verwendet werden, nämlich zur Messung der beiden Abstände der Laufkatze oder des Krans von den Enden der Laufkatzen- oder Kranbahn. An den gegenüberliegenden Enden der Laufkatze- oder Kranbahn ist jeweils ein Laser unveränderbar angeordnet. Die Laufkatze bzw. der Kran weist einen doppelseitigen Reflektor im Strahlengang jedes Lasers auf. Mit den Lasern und mit Signalempfängern für die reflektierenden Laserstrahlen ist eine Auswerteeinheit verbunden, welche die Positionswerte ausgibt und bestimmt.

### Darstellung der Erfindung:

Der Erfindung liegt die Aufgabe zugrunde, ein berührungslos arbeitendes Sensor-System zu schaffen, welches genau den Abstand zweier Krane oder anderer Hebezeuge voneinander bestimmt und auswertet, gleichzeitig selbstüberwachend ist, d.h. bei dem zu jedem Zeitpunkt eine Verbindung zwischen den beiden Kranen vorliegt, sodaß ihre Unterbrechung erkannt wird.

Gemäß der Erfindung wird die genannte Aufgabe dadurch gelöst, daß von den beiden benachbarten Kranen der eine nur einen Laser, der andere im Strahlengang des Lasers nur einen Reflektor und einer der beiden die Auswerteeinheit aufweist, über die der Abstand des Lasers von dem Reflektor meßbar ist, und von der bei Unter- oder Überschreitung eines Mindest- oder Höchstabstands oder bei nicht gesendetem, nicht reflektiertem oder unterbrochenem Laserstrahl eine Fehlermeldung abgegeben ist.

Bei der Erfindung wird auf dem einen Kran ein Laser eingesetzt, dessen gebündelter Strahl ohne Probleme Reichweiten von einigen hundert Metern hat und dessen Intensität dann immer noch ausreichend für eine nachfolgende Auswertung ist. Der Laser wird auf einen Reflektor gerichtet, der auf dem benachbarten Kran befestigt ist. Der reflektierte Strahl wird auf dem einen Kran wieder empfangen. Eine elektronische Auswerteeinheit mißt die Laufzeit des Lichts nach dem Prinzip der Phasenkorrelation und berechnet die Entfernung des Lasers von dem Reflektor und damit den Abstand der beiden Krane voneinander. Wird nun ein voreinstellbarer Mindest- oder Höchstabstand unter- oder überschritten erfolgt eine Meldung, ggf. verbunden mit der Auslösung eines Schaltvorgangs. Auch wenn der Laserstrahl nicht gesendet, nicht reflektiert oder unterbrochen ist, erfolgt eine Fehlermeldung, die ebenfalls mit einem Schaltvorgang verbunden sein kann.

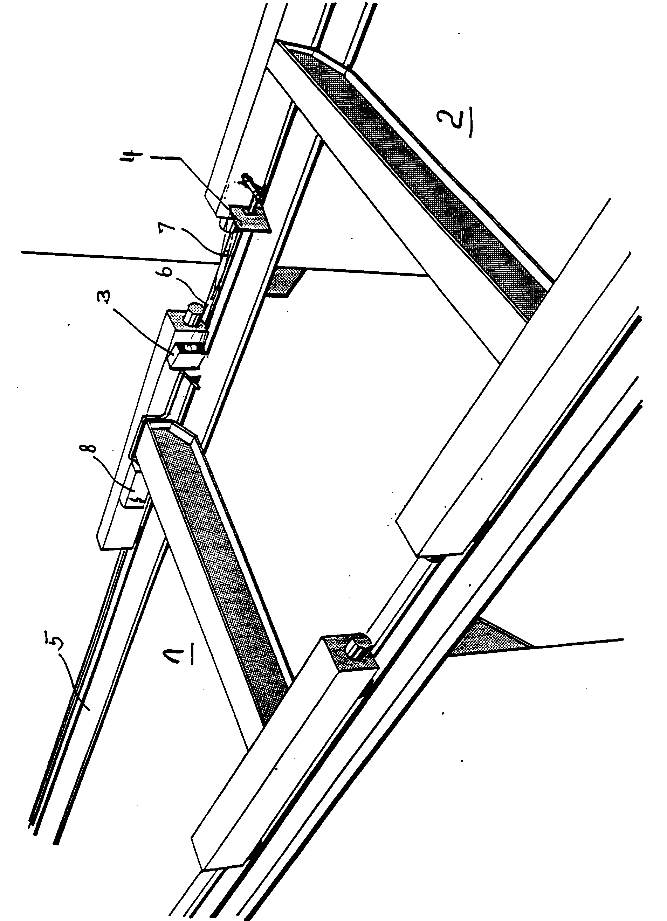

### Kurze Beschreibung der Zeichnung:

Ein Ausführungsbeispiel der Erfindung ist in der Zeichnung dargestellt und wird nachfolgend im einzelnen näher beschrieben. Die einzige Figur zeigt in perspektivischer Darstellung einen Ausschnitt aus einer Kranbahn mit zwei Kranen und einem Sensor-System

### Bester Weg zur Ausführung der Erfindung:

Auf einer gemeinsamen Kranbahn 5 sind zwei Krane 1, 2 verfahrbar. Die Krane 1, 2 werden durch ein berührungslos arbeitendes Sensor-System überwacht.

Auf dem einen Kran 1 ist ein Laser 3 befestigt. Der Laser 3 sendet Strahlen 6 aus. Im Strahlengang der Strahlen 6 ist auf dem anderen Kran 2 ein Reflektor 4 befestigt; der Laser 3 auf dem Kran 1 ist auf den Reflektor 4 auf dem Kran 2 ausgerichtet. Der reflektierte Strahl 7 gelangt auf einen Empfänger, der auf dem Kran 1 angeordnet ist. Im Ausführungsbeispiel ist der Empfänger mit dem Laser 3 zu einer Einheit zusammengefaßt. Mit dem Empfänger verbunden ist eine Auswerteeinheit 8.

Die von dem Laser 3 auf den Kran 1 ausgesandten gebündelten Strahlen 6 haben Reichweiten von einigen hundert Metern. Ihre Intensität ist auch bei größter Reichweite immer noch ausreichend für eine nachfolgende Auswertung. Die elektronische Auswerteeinheit 8 mißt die Laufzeit des Lichts nach dem Prinzip der Phasenkorrelation und berechnet die Entfernung des Lasers 3 von dem Reflektor 4 und somit die des Krans 1 von dem Kran 2. Wird nun ein voreingestellter Minimal- oder Maximalabstand unter- oder überschritten, wird der Laserstrahl 6 nicht ausgesandt, nicht reflektiert oder unterbrochen, so gibt die Auswerteeinheit 8 eine Fehlermeldung aus, durch die dann weitere Schaltvorgänge ausgelöst werden können.

Im Ausführungsbeispiel werden die beiden Krane 1, 2 überwacht. Es ist möglich, mehr als zwei auf derselben Kranbahn verfahrbare Krane zu überwachen. Es weist dann entweder jeder Kran in Fahrtrichtung auf derselben Seite den Laser, auf der entgegengesetzten Seite den Reflektor auf, sofern der Seite benachbart noch ein Kran vorhanden ist. Oder jeder ungerade Kran, also jeder erst, dritte, usw. Kran, weist auf beiden Seiten einen Lsser; jeder gerade Kran, also jeder zweite, vierte usw. Kran, auf beiden Seiten einen Reflektor auf, sofern der Seite benachbart noch ein Kran vorhanden ist.

### Gewerbliche Verwertbarkeit:

Das Sensor-System nach der Erfindung ist bei Kranen oder sonstigen Hebezeugen verwendbar, die zusammen mit einem oder mehreren anderen Kranen oder Hebezeugen auf derselben Kranbahn angeordnet sind.

## Patentansprüche

1. Berührungslos mit Lasern (3), Reflektoren (4) und einer Auswerteeinheit (8) arbeitendes Sensor-System zur Überwachung von zwei Kranen (1; 2), die auf einer gemeinsamen Kranbahn (5) verfahrbar sind, dadurch gekennzeichnet, daß der eine Kran (1) nur einen Laser (3), der andere Kran (2) im Strahlengang des Lasers (3) nur einen Reflektor (4) und einer der beiden die Auswerteeinheit (8) aufweist, über die der Abstand des Lasers (3) von dem Reflektor (4) meßbar ist, und von der bei Unter- oder Überschreitung eines Mindest- oder Höchstabstands oder bei nicht gesendetem, nicht reflektiertem oder unterbrochenem Laserstrahl eine Fehlermeldung abgegeben ist.

2. Sensor-System nach Anspruch 1 zur Überwachung von mehr als zwei Kranen (1; 2), die auf der gemeinsamen Kranbahn (5) verfahrbar sind, dadurch gekennzeichnet, daß jeder Kran (1; 2) auf derselben Seite den Laser (3), auf der entgegengesetzten Seite den Reflektor (4) aufweist, sofern der Seite benachbart noch ein Kran vorhanden ist.

3. Sensor-System nach Anspruch 1 zur Überwachung von mehr als zwei Kranen (1; 2), die auf der gemeinsamen Kranbahn (5) verfahrbar sind, dadurch gekennzeichnet, daß jeder ungerade Kran (1) auf jeder Seite nur einen der Laser (3), jeder gerade Kran (2) auf jeder Seite nur einen der Reflektoren (4) aufweist, sofern der Seite benachbart noch ein Kran vorhanden ist.

## Claims

1. Non-contact sensor system working with lasers (3), reflectors (4) and an evaluation unit (8), for monitoring two cranes (1; 2), movable on a common crane track (5) in which the one crane (1) exhibits only one laser (3), the other crane (2) exhibits only one reflector (4) interposed in the beam of the laser (3), and in which one of the two cranes exhibits the evaluation unit (8), by means of which arrangement the distance between the laser (3) and the reflector (4) can be measured, and from which a fault message can be emitted in the event of a minimum or maximum limit of said distance not being reached or being exceeded or in the event of the laser beam being interrupted or not being reflected.

2. Sensor system as in Claim 1 above, for monitoring more than two cranes (1; 2) movable on a common crane track (5) in which each crane (1; 2) exhibits the laser (3) on the same side and the reflector (4) on the opposite side, insofar as there is an adjacent crane.

3. Sensor system as in Claim 1 above, for monitoring more than two cranes (1; 2) movable on a common crane track (5) in which each uneven numbered crane (1) exhibits only one of the lasers (3) on each side and each even numbered crane (2) exhibits only one of the reflectors (4) on each side, insofar as there is an adjacent crane.

## Revendications

1. Système de capteur sans contact, fonctionnant avec des lasers (3), des réflecteurs (4) et une unité d'exploitation (8), pour la surveillance de deux grues (1 ; 2) se déplaçant sur un chemin de roulement de grue (5) commun, caractérisé en ce que l'une des grues (1) ne présente qu'un seul laser (3), en ce que l'autre grue (2) ne présente dans la trajectoire du laser (3) qu'un seul réflecteur (4), et en ce que l'une des deux grues présente l'unité d'exploitation (8), par laquelle la distance entre le laser (3) et le réflecteur (4) peut être mesurée, et qui émet un message d'erreur en cas de franchissement ou de dépassement d'un écartement minimal ou maximal, ou lorsque le rayon laser n'est pas émis, pas réfléchi ou est interrompu.

2. Système de capteur selon la revendication 1 pour la surveillance de plus de deux grues (1 ; 2) qui peuvent se déplacer sur un chemin de roulement (5) commun, caractérisé en ce que chaque grue (1 ; 2) présente du même côté le laser (3), sur le côté opposé le réflecteur (4), dans la mesure où il existe encore une grue voisine de ce côté

3. Système de capteur selon la revendication 1 pour la surveillance de plus de deux grues (1 ; 2) qui peuvent se déplacer sur un chemin de roulement (5) commun, caractérisé en ce que chaque grue impaire (1) présente de chaque côté un seul des lasers (3), chaque grue paire (2) présente de chaque côté un seul des réflecteurs (4), dans la mesure où il existe encore une grue voisine de ce côté
